# EUROPEAN PATENT APPLICATION

(11) **EP 4 851 704 A1**
(43) Date of publication of application: **09.12.2026**
(21) Application number: 25880938.3
(22) Date of filing: 11.09.2025
(51) Int. Cl.: G02F 1/1334, G02F 1/137, C09K 19/54

(54) **LIQUID CRYSTAL CAPSULE, AND CAPSULE SOLUTION, OPTICAL FILM, OPTICAL DEVICE AND TRANSMITTANCE-VARIABLE DEVICE USING SAME**

(30) Priority: 18.04.2025 KR 20250051087
(71) Applicant: LG Chem, Ltd., Seoul 07336 (KR)
(72) Inventor: KIM, Yeji, Yuseong-gu, Daejeon 34122 (KR); SEOK, Jin Ah, Yuseong-gu, Daejeon 34122 (KR); KIM, Jinhong, Yuseong-gu, Daejeon 34122 (KR); KIM, Jee Seon, Yuseong-gu, Daejeon 34122 (KR); KIM, Yunseop, Yuseong-gu, Daejeon 34122 (KR)
(74) Representative: Goddar, Heinz J.
(86) International application number: PCT/KR2025/014152
(87) International publication number: WO 2026/221173

(57) **Abstract**

The present invention relates to a liquid crystal capsule, comprising: a core containing liquid crystal and an emulsifier; and a polymer shell formed on a surface of the core; wherein the emulsifier is a mixture of an acetylenic diol-based compound and an alkylene glycol, and wherein a content of the alkylene glycol is 4 wt% or more based on the liquid crystal, and capsule solution, optical film, optical device, transmittance variable device using the same.

## Description

### [TECHNICAL FIELD]

### CROSS-REFERENCE TO RELATED APPLICATION(S)

This application claims the benefit of Korean Patent Application No. 10-2025-0051087 filed on April 18, 2025 with the Korean Intellectual Property Office, the disclosures of which are herein incorporated by reference in their entirety.

The present invention relates to a liquid crystal capsule, and capsule solution, optical film, optical device, transmittance variable device using the same that may induce a high transmittance/haze variation rate even at a lower voltage by lowering the surface interaction energy of the liquid crystal encapsulated inside the capsule, and there is no loss of the liquid crystal even during long-term storage.

### [BACKGROUND ART]

Polymer Dispersed Liquid Crystals (PDLC) films are applicable to high-luminance projection displays or high-contrast reflective display devices, and are composite materials in which liquid crystal molecular domains of several micrometers are dispersed in a polymer between conductive films. The driving principle of the PDLC is that light incident on a polymer layer in which liquid crystal is dispersed is scattered by a difference in refractive index between the liquid crystal and the polymer to be in an opaque state, but by applying an electric field thereto, the direction of the liquid crystal is aligned and the refractive index is changed, thereby controlling scattering and transmission of light to become a transparent state.

As such, PDLC devices do not require a separate polarizer and thus do not require a polarizing plate in terms of structure, and do not require an alignment process in terms of process, so that the PDLC devices may be manufactured by a simple method. Accordingly, the PDLC devices may be applied to smart glass and smart screens for buildings and automobiles corresponding to switchable windows, and may also be applied as black PDLC films for transparent OLEDs. In addition, the PDLC devices may be manufactured in a flexible form depending on a material used as a substrate.

Specifically, a liquid crystal-based smart window refers to an active window capable of controlling transmittance with glass including a separate liquid crystal layer, and is a technology applicable to the field of mobility as well as buildings. Through conventional polymer dispersed liquid crystal (PDLC) technology, liquid crystal domains having a size of several µm could be manufactured by mixing a monomer capable of light or thermal polymerization with liquid crystal and by phase separation between the polymer and the liquid crystal occurring during polymerization. The PDLC film may implement a light-shielding/transmission mode as the liquid crystal within the domains of several µm size has a refractive index that matches/mismatches with a polymer matrix according to voltage application on/off. However, in the PDLC, it is difficult to overcome a disadvantage of scattering visible light due to the liquid crystal domains larger than a visible light wavelength range.

On the other hand, in a case where the liquid crystal is domain-sized to a size of 380 nm or less, which is a minimum wavelength of visible light, a scattering issue may be improved, so that a transmittance variable liquid crystal film layer having superior haze may be manufactured.

In particular, in a case of manufacturing a color-type PDLC including a dye, there is a problem that anisotropic dyes are not uniformly aligned in a polymer according to an electric field, and in particular, a problem of contamination of a polymer matrix by the dye occurs. Accordingly, various studies are being conducted on a liquid crystal composite having a capsule structure in which liquid crystal and anisotropic dyes are encapsulated in a polymer shell to have excellent mechanical properties and high uniformity, and to prevent contamination of the polymer matrix by the dye.

However, as the liquid crystal and the anisotropic dye are encapsulated in the polymer shell, the liquid crystal encapsulated in the capsule has a limitation in that the alignment of the liquid crystal is changed only when a higher voltage is applied due to a high interaction occurring as a contact area with a material contained in the capsule shell increases.

### [DETAILED DESCRIPTION OF THE INVENTION]

### [Technical Problem]

The present invention is to provide a liquid crystal capsule that may induce a high transmittance/haze variation rate even at a lower voltage by lowering the surface interaction energy of the liquid crystal encapsulated inside the capsule, and there is no loss of the liquid crystal even during long-term storage.

In addition, the present invention is to provide capsule solution, optical film, optical device, transmittance variable device using the liquid crystal capsule.

### [Technical Solution]

In order to solve the above problem, in this specification, there is provided a liquid crystal capsule, comprising: a core containing liquid crystal and an emulsifier; and a polymer shell formed on a surface of the core; wherein the emulsifier is a mixture of an acetylenic diol-based compound and an alkylene glycol, and wherein a content of the alkylene glycol is 4 wt% or more based on the liquid crystal.

This specification also provides a capsule solution, comprising the liquid crystal capsule and a solvent.

This specification also provides an optical film, comprising the liquid crystal capsule.

This specification also provides an optical device, comprising the optical film.

This specification also provides a transmittance variable device, comprising the optical film.

Hereinafter, a liquid crystal capsule, and capsule solution, optical film, optical device, transmittance variable device using the same according to specific embodiments of the invention will be explained in detail.

Unless explicitly stated herein, the technical terms used herein are for the purpose of describing specific embodiments only and is not intended to limit the scope of the invention.

As used herein, the singular forms also include the plural forms unless the context clearly dictates otherwise.

It should be understood that the terms "comprise," "include", "have", etc. are used herein to specify the presence of stated feature, region, integer, step, action, element and/or component, but do not preclude the presence or addition of one or more other feature, region, integer, step, action, element, component and/or group.

Further, the terms including ordinal numbers such as "a first", "a second", etc. are used only for the purpose of distinguishing one component from another component, and are not limited by the ordinal numbers. For instance, a first component may be referred to as a second component, or similarly, the second component may be referred to as the first component, without departing from the scope of the present disclosure.

Further, the derivative compound refers to a compound changed within a limit that does not significantly change a structure and properties of a parent body, such as introduction of a functional group, oxidation, reduction, and substitution of atoms, when an organic compound is the parent body.

Further, the weight average molecular weight refers to a polystyrene-converted weight average molecular weight measured by gel permeation chromatography(GPC). In the process of measuring the polystyrene-converted weight average molecular weight measured by GPC, a detector and an analytical column, such as a commonly known analysis apparatus and differential refractive index detector can be used, and commonly applied temperature conditions, solvent, and flow rate can be used. Specific examples of the measurement condition are as follows: Waters PL-GPC220 instrument was used and a Polymer Laboratories PLgel MIX-B 300 mm length column was used. An evaluation temperature was 160°C, and 1,2,4-trichlorobenzene was used for a solvent at a flow rate of 1 mL/min. Samples were prepared at a concentration of 10 mg/10 mL and then supplied in an amount of 200 µL, and the values of Mw could be determined using a calibration curve formed using a polystyrene standard. 9 Kinds of the polystyrene standards were used with the molecular weight of 100 / 500 / 1000 / 2,000 / 10,000 / 30,000 / 70,000 / 200,000 / 700,000.

Now, the present disclosure will be described in more detail.

### 1. Liquid crystal capsule

According to one embodiment of the invention, there is provided a liquid crystal capsule, comprising: a core containing liquid crystal and an emulsifier; and a polymer shell formed on a surface of the core; wherein the emulsifier is a mixture of an acetylenic diol-based compound and an alkylene glycol, and wherein a content of the alkylene glycol is 4 wt% or more based on the liquid crystal.

The present inventors have confirmed through experiments that, as in the liquid crystal capsule of the embodiment, by using a mixture of an acetylenic diol-based compound and an alkylene glycol as an emulsifier, and satisfying a content of the alkylene glycol of 4 wt% or more based on the liquid crystal, it is possible to lower the surface interaction energy of the liquid crystal encapsulated inside the capsule, thereby inducing a high transmittance/haze variation rate even at a lower voltage, and that durability of the liquid crystal capsule is improved because a polymer shell is easily formed by cross-linking on a surface of the core, and have completed the invention.

Specifically, the liquid crystal capsule of the embodiment may include a core containing liquid crystal. The structure of the liquid crystal capsule according to the present invention is characterized in that the liquid crystal is contained inside encapsulated by a shell made of a polymer. Due to this, uniformity of liquid crystal particles may be improved.

The liquid crystal is not particularly limited, but examples thereof may include nematic liquid crystal, smectic liquid crystal, cholesteric liquid crystal, chiral nematic liquid crystal, and the like.

The liquid crystal may contain a cyano group (-CN). As the liquid crystal contains the cyano group, refractive index anisotropy may be increased, and a light-shielding/transmission mode may be implemented since refractive indices of the liquid crystal within a domain having a size of several µm and a polymer matrix are mismatched/matched according to voltage application on/off.

An example of the liquid crystal containing the cyano group is not particularly limited, and various conventionally known cyano-based liquid crystals may be applied without limitation. However, as an example, [1,1'-Biphenyl]-4-carbonitrile, 4-ethyl- ; 4-n-Butyl-4'-cyanobiphenyl ; [1,1'-Biphenyl]-4-carbonitrile, 4'-pentyl- ; Benzonitrile, 4-(trans-4-propylcyclohexyl)- ; [1,1'-Biphenyl]-4-carbonitrile, 4-(trans-4-pentylcyclohexyl)- ; Cyclohexanecarboxylic acid, 4-ethyl-, 4'-cyano[1,1'-biphenyl]-4-yl ester, trans ; or a mixture of two or more thereof may be mentioned.

In addition, the liquid crystal may have a refractive index anisotropy (Δn) of 0.2 or more, or 0.3 or less, or 0.21 or less, or 0.2 to 0.3, or 0.2 to 0.21. The refractive index anisotropy (Δn) means a difference value between an ordinary refractive index and an extraordinary refractive index. A method for measuring the refractive index anisotropy of the liquid crystal contained in the liquid crystal capsule is not limited, and various conventionally known methods may be applied without limitation.

Meanwhile, the core may further include an emulsifier. The emulsifier is a surfactant used for the formation of liquid crystal droplets, and by lowering the interfacial tension of the liquid crystal within the capsule, the surface anchoring energy of the liquid crystal may be significantly lowered.

The emulsifier is a non-ionic surfactant used for the formation of liquid crystal droplets, and any surfactant that does not ionize in an aqueous solution may be used without limitation. The types of non-ionic surfactants are well known in the art, and publicly known non-ionic surfactants may be used without limitation.

More specifically, the emulsifier may be a mixture of an acetylenic diol-based compound and an alkylene glycol. In this way, as the mixture of the acetylenic diol-based compound and the alkylene glycol is used as the emulsifier in the present invention, the density of the polymer shell is decreased by the alkylene glycol, and a threshold voltage corresponding to a voltage at 10% transmittance of maximum transmittance is decreased, so that an excellent transmittance/haze variation rate may be realized even at a lower voltage.

In particular, these effects may be maximized when the content of the alkylene glycol is introduced of 4 wt% or more, or in a range of 4 wt% to 6 wt%, or in a range of 5 wt% to 6 wt%, or in a range of 5.2 wt% to 5.6 wt%, or in a range of 5.3 wt% to 5.5 wt% based on the liquid crystal. The content of the alkylene glycol refers to a relative content ratio of the alkylene glycol when a content of the liquid crystal is 100 wt%.

Meanwhile, the emulsifier is a mixture of an acetylenic diol-based compound and an alkylene glycol, and specifically, the emulsifier may be a mixed solution in which the acetylenic diol-based compound is dissolved in the alkylene glycol. That is, instead of manufacturing a liquid crystal capsule by separately introducing each of the acetylenic diol-based compound and the alkylene glycol as the emulsifier, the mixed solution is introduced as the emulsifier after manufacturing the mixed solution in which the acetylenic diol-based compound is dissolved in the alkylene glycol.

When the liquid crystal capsule is manufactured by separately introducing each of the acetylenic diol-based compound and the alkylene glycol as the emulsifier, formation of the polymer shell by cross-linking is inhibited, and there is a limitation in that durability of the liquid crystal capsule becomes poor, such as loss of liquid crystal during long-term storage of the liquid crystal capsule.

The acetylenic diol-based compound may include an acetylenic diol compound or a derivative thereof. The acetylenic diol-based compound may have an HLB (Hydrophile Lipophile Balance) value in a range of 2 to 3.5, or in a range of 2.5 to 3.5. Generally, in order to make a stable oil-in-water emulsion using a conventional emulsifier, it is necessary for the emulsifier to be adsorbed at an aqueous phase/oil phase interface to form droplets, and for this purpose, the HLB (Hydrophile Lipophile Balance) value of the emulsifier to be used must be carefully adjusted according to the polarity of the oil phase.

Specifically, the HLB may be calculated by the following Equation 1. [Equation 1] $HLB = 20 ∗ \left(MH / M\right)$

In Equation 1, M_{H} is a molecular weight (or molar mass) of a hydrophilic group, and M is a molecular weight (or molar mass) of the emulsifier.

As a more specific example, the acetylenic diol-based compound may be 2,4,7,9-tetramethyl-5-decyn-4,7-diol. Since the acetylenic diol-based compound does not have an ethylene oxide repeating unit in a molecular structure thereof, interaction with a cyano group in the liquid crystal may be decreased, and for this reason, surface anchoring energy of the liquid crystal in the capsule is sufficiently lowered, so that a high transmittance/haze variation rate may be induced even at a lower voltage. In addition, since formation of the polymer shell by cross-linking at a core surface generated by hydrophobic adsorption according to a temperature increase is more facilitated, durability of the liquid crystal capsule may be improved.

That is, the acetylenic diol-based compound may have an ethylene oxide repeating unit content of less than 0.001 mol% based on 100 mol% of the acetylenic diol-based compound. That is, the acetylenic diol-based compound may not contain the ethylene oxide repeating unit, or may contain the ethylene oxide repeating unit in an extremely trace amount. If the ethylene oxide repeating unit content increases to 0.001 mol% or more based on 100 mol% of the acetylenic diol-based compound, as interaction between a polar cyano group in the liquid crystal and the ethylene oxide repeating unit increases, it is difficult to sufficiently lower the surface anchoring energy of the liquid crystal in the capsule, and it is difficult to sufficiently form the polymer shell by cross-linking at the core surface generated by hydrophobic adsorption.

The alkylene glycol is a compound in which hydroxy groups are bonded to both ends of an alkylene group, and examples of the alkylene group are not particularly limited, and the alkylene group is a divalent functional group derived from an alkane, which may be linear or branched, and may be methylene, ethylene, propylene, isobutylene, sec-butylene, tert-butylene, pentylene, hexylene, or the like. However, for a specific example, the alkylene glycol may be ethylene glycol.

In addition, the core may further include an anisotropic dye. The dye is not particularly limited as long as it is a dopable anisotropic dye, and specifically, an azo-based compound containing an azo group in a molecule may be used.

Meanwhile, the liquid crystal capsule of one embodiment may include a polymer shell formed on the surface of the core. The shell may be a single-layer shell made of a single polymer material, or may be a double-layer shell or a multi-layer shell of more layers made of different polymer materials for improved mechanical properties and particle uniformity. Accordingly, the uniformity of the liquid crystal particles may be improved, and at the same time, a problem of contamination by a dye may be improved.

The polymer shell may include a polymer cross-linked with a cross-linking agent. Specific examples of the polymer are not particularly limited, but, for example, the polymer may be one type of polymer selected from polyvinyl alcohol, polyurea, polyurethane, polyamide including nylon, polyacetal, and polyester.

The cross-linking agent is a material used for cross-linking of a polymer, and specific examples thereof are not particularly limited, but, for example, glyoxal may be used. The content of the cross-linking agent may be in a range of 10 wt% to 30 wt% based on the weight of the liquid crystal. That is, when the content of the liquid crystal is 100 wt%, the content ratio of the cross-linking agent may be in a range of 10 wt% to 30 wt%.

As a specific example, the polymer shell formed on the core surface may be made of a polyvinyl alcohol (PVA) resin cross-linked with glyoxal. There is no particular limitation on the type of PVA, and various types of PVA having different molecular weights or saponification rates may be appropriately selected according to the purpose. As a cross-linking agent for cross-linking the PVA, glyoxal is used.

Meanwhile, the liquid crystal capsule of one embodiment may have a final decomposition temperature measured by TGA in a range of 450 °C to 550 °C, or in a range of 480 °C to 520 °C, or in a range of 490 °C to 510 °C, or in a range of 495 °C to 505 °C when a temperature of the liquid crystal capsule is raised from 50 °C to 700 °C at a heating rate of 10 °C/min. The final decomposition temperature measured by TGA refers to a temperature at a point where it can be evaluated that decomposition is completed because there is no further mass reduction during TGA measurement. The liquid crystal capsule of one embodiment has a high final decomposition temperature measured by TGA, so that the polymer shell is polymerized enough to suppress the occurrence of loss of liquid crystal during long-term storage of the liquid crystal capsule, and thus durability of the liquid crystal capsule may be improved.

The average diameter of the liquid crystal capsule may be in a range of 400 nm to 5 µm. If the average diameter of the liquid crystal capsule is excessively decreased, there is a problem in that a driving voltage is increased and thus power consumption is increased. In addition, if the average diameter of the liquid crystal capsule is excessively increased, there is a problem in that visible light is scattered and thus haze is increased.

The liquid crystal capsule may be a group of individual particles having an average diameter in a range of 400 nm to 5 µm, and individual fine particles included in such a group may have a diameter in a range of 400 nm to 5 µm on average. More specifically, 95% or 99% of the individual fine particles included in the group may have a diameter in a range of 400 nm to 5 µm.

The present application also provides uses of the liquid crystal capsule. The liquid crystal capsule of the present application may be used for various light modulation devices to which liquid crystal is applicable. Accordingly, there is provided a light modulation device comprising: a substrate; and a liquid crystal layer formed on one surface of the substrate and having the liquid crystal capsule. Manufacturing methods and types of the light modulation device are well known in the art, and the light modulation device may be manufactured by using publicly known manufacturing methods without limitation. The light modulation device includes, but is not limited to, a smart window, an isotropic film, a polarization control film, or a flexible LCD.

The manufacturing method of the liquid crystal capsule is not significantly limited, and various conventionally known manufacturing methods of liquid crystal capsules may be applied without limitation. However, for an example, the manufacturing method includes the steps of: (1) preparing a mixed solution formed by mixing a mixed material containing liquid crystal, an emulsifier, and polyvinyl alcohol (PVA) in a solvent; (2) forming droplets from the mixed solution; (3) disposing the polyvinyl alcohol (PVA) around the droplets; and (4) cross-linking the polyvinyl alcohol (PVA) using a cross-linking agent to form a polymer shell surrounding the liquid crystal, thereby manufacturing a liquid crystal capsule in which the liquid crystal is encapsulated with the polymer shell.

In the step of (1) preparing a mixed solution formed by mixing a mixed material containing liquid crystal, an emulsifier, and polyvinyl alcohol (PVA) in a solvent, the solvent is not particularly limited and may be appropriately selected according to a purpose, and examples thereof include water such as pure water, such as ion-exchanged water, ultrafiltered water, reverse osmosis water, or distilled water, or ultrapure water. Additives may be further introduced as necessary.

In the step of (1) preparing a mixed solution formed by mixing a mixed material containing liquid crystal, an emulsifier, and polyvinyl alcohol (PVA) in a solvent, an example of a method of mixing the liquid crystal, the emulsifier, the polyvinyl alcohol (PVA), and the additives with the solvent is not significantly limited, and various methods used in conventionally known emulsification reactions may be applied without limitation. However, for an example, a method of mixing the liquid crystal with a solution containing the solvent, the emulsifier, and the polyvinyl alcohol may be used, but is not limited thereto.

In the step of (2) forming droplets from the mixed solution, the droplets are dispersed in a dispersion medium, and more specifically, the droplets are dispersed in the dispersion medium in a state in which the emulsifier covers the periphery of the liquid crystal.

As a method of preparing the droplets, a method of producing droplets using a dispersion-type emulsification apparatus may be used.

The dispersion-type emulsification apparatus is not particularly limited as long as droplets having a desired particle diameter are obtained, and may be appropriately selected according to a purpose. For example, a homo-mixer, which is an apparatus for mixing liquids, or a homogenizer, which is an apparatus for refining and unifying particles, may be used. In addition, a dispersion method is not particularly limited, and for example, any dispersion method of stirring, ultrasonic waves, or high pressure may be used.

In the present invention, as the dispersion-type emulsification apparatus, various dispersion-type emulsification apparatuses such as a high-speed homogenizer, an ultrasonic homogenizer, a high-pressure homogenizer, or a homo-mixer may be used.

In addition, as a more preferable embodiment of the step of preparing the droplets, a droplet preparation step of preparing droplets using a dispersion-type emulsification apparatus may be used.

The dispersion-type emulsification apparatus is not particularly limited as long as droplets having a desired particle diameter are obtained, and for example, various dispersion-type emulsification apparatuses such as the above-mentioned high-speed homogenizer, ultrasonic homogenizer, high-pressure homogenizer, or homo-mixer may be used in an appropriate combination.

In the step of (3) disposing the polyvinyl alcohol (PVA) around the droplets, coacervation in which the PVA gathers around the liquid crystal composition may proceed under a droplet dispersion liquid at a predetermined temperature. For an example, it is preferable to set a solution temperature of the droplet dispersion liquid in the coacervation step to a room temperature or higher.

In the step of (4) cross-linking the polyvinyl alcohol (PVA) using a cross-linking agent to form a polymer shell surrounding the liquid crystal, thereby manufacturing a liquid crystal capsule in which the liquid crystal is encapsulated with the polymer shell, the cross-linking reaction is preferably performed under acidic conditions. As the acidic conditions, the pH is preferably in a range of 1 to 5, and more preferably about 3.

### 2. Capsule solution

Meanwhile, according to another embodiment of the invention, there may be provided a capsule solution comprising the liquid crystal capsule of the one embodiment and a solvent. The description regarding the liquid crystal capsule includes the contents described above with respect to the one embodiment.

The solvent is not particularly limited and may be appropriately selected according to a purpose, and for example, there is provided water such as pure water, such as ion-exchanged water, ultrafiltration water, reverse osmosis water, and distilled water, or ultrapure water.

In the capsule solution, the liquid crystal capsules are dispersed in the solvent. That is, the capsule solution may be a liquid crystal capsule dispersion liquid. The capsule solution is used as a coating liquid for forming a liquid crystal layer. For example, the liquid crystal layer is formed by coating the capsule solution on a support substrate to form a film.

There is provided the liquid crystal that may be contained in a range of 60 mass% to 80 mass%, or in a range of 65 mass% to 75 mass%, or in a range of 69 mass% to 72 mass%, or in a range of 69 mass% to 70 mass%, or in a range of 71 mass% to 72 mass% based on the capsule solution. The mass ratio of the liquid crystal refers to a relative mass ratio of the liquid crystal when a mass of the capsule solution is 100 mass%. In the range, sufficient liquid crystal performance may be obtained, and at the same time, a thickness of the polymer shell may become sufficient, so that durability of the liquid crystal capsule may be improved.

A method for measuring the mass ratio of the liquid crystal based on the capsule solution is not limited, and various conventionally known methods may be applied without limitation. However, for example, after freeze-drying 5 mL of the capsule solution, a mass is measured to calculate a solid content in a unit volume, then 1 mg of the freeze-dried capsule solution is put into TGA2 equipment of METTLER TOLEDO, and the temperature is raised from 50 °C to 700 °C at a heating rate of 10 °C/min. While checking a mass decrease according to temperature, the mass ratio (mass%) of the liquid crystal based on the capsule solution may be obtained through a mass ratio decreased in a range of 200 °C to 500 °C.

### 3. Optical film

Meanwhile, according to still another embodiment of the invention, there may be provided an optical film comprising the liquid crystal capsule of the one embodiment. The description regarding the liquid crystal capsule includes the contents described above with respect to the one embodiment.

The optical film may include a polymer and the liquid crystal capsules of the one embodiment dispersed inside the polymer. Content regarding the polymer is not particularly limited, but for example, a transparent material may be used for the polymer. Specific examples of the polymer are not particularly limited, but for example, the polymer may be selected from among polyvinylpyrrolidone, polyvinyl alcohol, polyurea, polyurethane, polyamide including nylon, polyacetal, and polyester.

As a more specific example, the optical film may be formed by coating the capsule solution of the other embodiment on a supporting substrate to form a film. In addition, the optical film may be formed by coating a mixture of the capsule solution of the other embodiment and a polymer on a supporting substrate to form a film.

Specific details regarding the optical film may be applied without limitation to details regarding various conventionally known optical films. For example, all details regarding a structure, a composition, a manufacturing method, physical properties, uses, and the like of the optical film may be applied without limitation to various details widely known in the conventional film field.

However, for example, the optical film may be used for a transmittance variable film.

In addition, a thickness of the optical film may be in a range of 10 µm to 30 µm. The optical film has an advantage of being able to implement an excellent transmittance/haze variation rate even at a low thickness in a range of 10 µm to 30 µm.

### 4. Optical device

Meanwhile, according to still another embodiment of the invention, there may be provided an optical device comprising the optical film of the other embodiment. The description regarding the optical film includes the contents described above with respect to the other embodiment.

Contents regarding the optical device may be applied without limitation to various conventionally known optical devices. For example, as for the specific structure, size, manufacturing method, physical properties, uses, and the like of the optical device, various contents widely known in the conventional display field may be applied without limitation.

However, as an example, the optical device may be a light modulation device including the optical film of the other embodiment. Specific examples of the light modulation device are not particularly limited, but for example, may include a smart window, an isotropic film, a polarization control film, a liquid crystal display (LCD), an organic light emitting display (OLED), or the like.

More specifically, as an example of the optical device, there is provided a liquid crystal display element having a set of substrates disposed to face each other, electrodes formed on one or both sides of the facing surfaces of each of the set of substrates, a liquid crystal layer formed by coating the liquid crystal capsule solution of the present invention disposed between the substrates, and an electric field applying means for applying an electric field to the liquid crystal capsule of the present invention in the liquid crystal layer through the electrodes.

The optical device may have a threshold voltage of 25 V or less, or 22 V or less, or 20 V or less, or 1 V or more, or in a range of 1 V to 25 V, or in a range of 1 V to 22 V, or in a range of 1 V to 20 V. The threshold voltage means a voltage at 10% transmittance of maximum transmittance, and as the optical device has the threshold voltage in the aforementioned range, the optical device may be driven even at a lower voltage. A method of measuring the threshold voltage is not limited, and various methods widely known in the field of liquid crystal-containing optical devices may be applied without limitation. However, as an example, it may be measured through a haze meter (NDH7000, Nippon Denshoku) while applying a voltage through a function generator.

In addition, the optical device may have a saturation voltage of 200 V or less, or 180 V or less, or 170 V or less, or 160 V or less, or 150 V or less, or 120 V or less, or 100 V or less, or 1 V or more, or 1 V to 200 V, or 1 V to 180 V, or 1 V to 170 V, or 1 V to 160 V, or 1 V to 150 V, or 1 V to 120 V, or 1 V to 100 V. The saturation voltage refers to a minimum voltage at which haze is saturated, and as the optical device has the saturation voltage in the range, the optical device may be driven even at a lower voltage. A method for measuring the saturation voltage is not limited, and various methods widely known in the field of a conventional liquid crystal-containing optical device may be applied without limitation. However, as an example, it may be measured through a haze meter (NDH7000, Nippon Denshoku) while applying a voltage through a function generator.

In addition, the optical device may have a contrast of 3 or more, or 3.2 or more, or 3.5 or more, or 3.9 or more, or 6.5 or more, or 7 or more, or 7.1 or more, or 40 or less, or 3 to 40, or 3.2 to 40, or 3.5 to 40, or 3.9 to 40, or 6.5 to 40, or 7 to 40, or 7.1 to 40. The contrast refers to a ratio between a transmittance at a voltage of 100 V and a transmittance at a voltage of 0 V, and as the optical device has the contrast in the range, the optical device may realize an excellent transmittance variation rate even at a lower voltage. A method for measuring the contrast is not limited, and various methods widely known in the field of a conventional liquid crystal-containing optical device may be applied without limitation. However, as an example, it may be measured through a haze meter (NDH7000, Nippon Denshoku) while applying a voltage through a function generator.

In addition, the optical device may have ΔHaze, which is a difference value obtained by subtracting a haze at an applied voltage of 0 V from a haze at an applied voltage of 100 V, of -65% or less, or -66% or less, or -67% or less, or -68% or less, or - 70% or less, or -80% or less, or -84% or less, or -99% or more, or -99% to -65%, or -99% to -66%, or -99% to -67%, or -99% to -68%, or -99% to -70%, or -99% to -80%, or -99% to -84%. As the optical device has the ΔHaze value in the range, the optical device may realize an excellent haze variation rate even at a lower voltage. A method for measuring the haze is not limited, and various methods widely known in the field of a conventional liquid crystal-containing optical device may be applied without limitation. However, as an example, it may be measured through a haze meter (NDH7000, Nippon Denshoku) while applying a voltage through a function generator.

### 5. Transmittance variable device

Meanwhile, according to still another embodiment of the invention, there may be provided a transmittance variable device comprising the optical film of the other embodiment. The description regarding the optical film includes the contents described above with respect to the other embodiment.

Contents regarding the transmittance variable device may be applied without limitation to various conventionally known transmittance variable devices. For example, as for a specific structure, size, manufacturing method, physical properties, uses, and the like of the transmittance variable device, various contents widely known in a conventional liquid crystal capsule field may be applied without limitation. However, as an example, the transmittance variable device may include a polarizing layer and a transmittance variable layer, and the dichroic dye of the embodiment may be contained in the polarizing layer or the transmittance variable layer as a light modulation material.

The transmittance variable device of the present application may be applied to all devices to which transmittance variability may be applied. For example, the transmittance variable device of the present application may be applied to a sunroof, vehicle glass, goggles, sunglasses, a helmet, or the like to provide a transmittance variable device. As long as the transmittance variable device includes the transmittance variable device of the present application, other components or structures are not particularly limited, and all contents known in this field may be appropriately applied. There is provided a transmittance variable device in which the transmittance variable device is applied to a sunroof, vehicle glass, goggles, sunglasses, or a helmet.

### [Advantageous Effects]

According to the present invention, there may be provided a liquid crystal capsule, and capsule solution, optical film, optical device, transmittance variable device using the same that may induce a high transmittance/haze variation rate even at a lower voltage by lowering the surface interaction energy of the liquid crystal encapsulated inside the capsule, and there is no loss of the liquid crystal even during long-term storage.

### [DETAILED DESCRIPTION OF THE EMBODIMENTS]

Hereinafter, the present disclosure will be explained in detail with reference to the following examples. However, these examples are for illustrative purposes only, and the scope of the present disclosure is not limited thereto.

### <EXAMPLE : Manufacturing of liquid crystal capsule and capsule solution>

### Example 1

0.249 g of an emulsifier (0.5 wt% based on a weight of an aqueous solution) was added to an aqueous solution prepared by mixing 0.65 g of polyvinyl alcohol (PVA) and 46.8 g of water, and dissolved by stirring. As the emulsifier, 0.249 g of a mixed solution (0.5 wt% based on the weight of the aqueous solution) prepared by dissolving 0.125 g of 2,4,7,9-tetramethyl-5-decyn-4,7-diol (HLB: 3) in 0.124 g of ethylene glycol (5.4 wt% based on a weight of liquid crystal) was used.

Thereafter, 2.3 g of a cyanide-based liquid crystal (a mixture of [1,1'-Biphenyl]-4-carbonitrile, 4-ethyl-; 4-n-Butyl-4'-cyanobiphenyl; [1,1'-Biphenyl]-4-carbonitrile, 4'-pentyl-; Benzonitrile, 4-(trans-4-propylcyclohexyl)-; [1,1'-Biphenyl]-4-carbonitrile, 4-(trans-4-pentylcyclohexyl)-; and Cyclohexanecarboxylic acid, 4-ethyl-, 4'-cyano[1,1'-biphenyl]-4-yl ester, trans-) and 0.161 g of an azo-based anisotropic dye were added thereto, and emulsification was performed at 4,000 rpm for 1 hour through an IKA homogenizer T25.

Thereafter, the temperature of the solution was raised to 40 °C under stirring, and the PVA was adsorbed on a surface of droplets for 18 hours.

Thereafter, 0.8 g of a 40% glyoxal aqueous solution was added as a cross-linking agent, and the pH of the solution was adjusted to 3 to cross-link the adsorbed PVA at 40 °C for 18 hours.

The solution was concentrated with a rotary evaporator for 1 hour, and then centrifuged at 5,000 rpm for 5 minutes to remove unencapsulated liquid crystal, and a supernatant was recovered to obtain a capsule solution containing liquid crystal capsules.

### Examples 2 and 3

A liquid crystal capsule and a capsule solution were manufactured in the same manner as in Example 1, except that 1.2 g of a 40% glyoxal aqueous solution was added instead of 0.8 g of the 40% glyoxal aqueous solution as the cross-linking agent.

### <COMPARATIVE EXAMPLE: Manufacturing of liquid crystal capsule and capsule solution>

### Comparative Example 1

A liquid crystal capsule and a capsule solution were prepared in the same manner as in the Example 1, except that 0.25 g (0.5 wt% based on a weight of an aqueous solution) of a mixed solution in which 0.1875 g of 2,4,7,9-tetramethyl-5-decyn-4,7-diol (HLB: 3) was dissolved in 0.0625 g (2.7 wt% based on a weight of liquid crystal) of ethylene glycol was added as the emulsifier.

### Comparative Example 2

A liquid crystal capsule and a capsule solution were prepared in the same manner as in the Example 1, except that 0.25 g (0.5 wt% based on the weight of the aqueous solution) of ethoxylated tetramethyl decynediol (ethylene oxide content: 20 wt%; HLB: 4) was added as the emulsifier.

### Comparative Example 3

0.25 g of an emulsifier, ethoxylated tetramethyl decynediol (ethylene oxide content: 20 wt%; HLB: 4), (0.5 wt% based on a weight of an aqueous solution) was added to an aqueous solution prepared by mixing 0.7 g of polyvinyl alcohol (PVA) and 49.3 g of water, and dissolved by stirring. Thereafter, 0.25 g of ethylene glycol (5.4 wt% based on a weight of liquid crystal) was further added as an additive.

Thereafter, 2.3 g of a cyanide-based liquid crystal (a mixture of [1,1'-Biphenyl]-4-carbonitrile, 4-ethyl-; 4-n-Butyl-4'-cyanobiphenyl; [1,1'-Biphenyl]-4-carbonitrile, 4'-pentyl-; Benzonitrile, 4-(trans-4-propylcyclohexyl)-; [1,1'-Biphenyl]-4-carbonitrile, 4-(trans-4-pentylcyclohexyl)-; and Cyclohexanecarboxylic acid, 4-ethyl-, 4'-cyano[1,1'-biphenyl]-4-yl ester, trans-) and 0.161 g of an azo-based anisotropic dye were added thereto, and emulsification was performed at 4,000 rpm for 1 hour through an IKA homogenizer T25.

Thereafter, the temperature of the solution was raised to 40 °C under stirring, and the PVA was adsorbed on a surface of droplets for 18 hours.

Thereafter, 0.8 g of a 40% glyoxal aqueous solution was added as a cross-linking agent, and the pH of the solution was adjusted to 3 to cross-link the adsorbed PVA at 40 °C for 18 hours.

The solution was concentrated with a rotary evaporator for 1 hour, and then centrifuged at 5,000 rpm for 5 minutes to remove unencapsulated liquid crystal, and a supernatant was recovered to obtain a capsule solution containing liquid crystal capsules.

### Comparative Example 4

A liquid crystal capsule and a capsule solution were prepared in the same manner as in the Example 1, except that 0.25 g (0.5 wt% based on the weight of the aqueous solution) of ethoxylated tetramethyl decynediol (ethylene oxide content: 40 wt%; HLB: 8) was added as the emulsifier.

### Comparative Example 5

A liquid crystal capsule and a capsule solution were prepared in the same manner as in the Example 1, except that 0.25 g (0.5 wt% based on the weight of the aqueous solution) of 2,4,7,9-tetramethyl-5-decyn-4,7-diol (HLB: 3) was added as the emulsifier.

### <EXPERIMENTAL Example>

With respect to the liquid crystal capsule or the capsule solution obtained in the above Examples and Comparative Examples, physical properties were measured by the following method, and the results are shown in Table 1.

### 1. Physical properties of liquid crystal capsule

### (1) Size of capsule in capsule solution

The average diameter (nm) and standard deviation of the capsules was measured using a Malvern Zetasizer zs with 4 mL of a diluted capsule solution (mixed with water and capsule solution at a weight ratio of 4:1) under conditions of RI: 1.5 and 25 °C.

### (2) Ratio of liquid crystal in capsule solution (mass %)

After freeze-drying 5 mL of the capsule solution, the mass was measured to calculate the solid content per unit volume. 1 mg of the freeze-dried capsule solution was introduced into a TGA2 equipment of METTLER TOLEDO, and the temperature was raised from 50 °C to 700 °C at a heating rate of 10 °C/min, and then mass reduction according to temperature was checked. The ratio of liquid crystal in the capsule solution (mass %) was obtained through the mass ratio reduced in a range of 200 °C to 500 °C.

### (3) TGA final decomposition temperature (°C)

After freeze-drying 5 mL of the capsule solution, the mass was measured to calculate the solid content per unit volume. 1 mg of the freeze-dried capsule solution was introduced into a TGA2 equipment of METTLER TOLEDO, and the temperature was raised from 50 °C to 700 °C at a heating rate of 10 °C/min, and then mass reduction according to temperature was checked, and a last temperature at which decomposition is completed is determined as the TGA final decomposition temperature.

### (4) Whether or not liquid crystal is lost

The capsule solutions obtained in the Examples and Comparative Examples are stored for 2 weeks to check whether or not the liquid crystal is lost from the liquid crystal capsule, and evaluation is performed under the following criteria.
Poor: loss of liquid crystal occurs in the capsule solution
Good: loss of liquid crystal does not occur in the capsule solution

### 2. Physical properties of liquid crystal capsule film

### (1) Thickness (µm)

Mixing 0.8 mL of the capsule solution and 0.2 mL of a 50 wt% aqueous solution of polyvinylpyrrolidone (PVP; Mw=55,000), coating a mixture thereof on ITO of a PET-ITO film with a Mayer bar, and then drying at 70 °C for 2 hours. (However, in cases of Comparative Examples 3, 4, and 5 in which liquid crystal was lost from the capsule solution, evaluation was not performed because film preparation was impossible.) The thickness of the liquid crystal capsule film was measured through Alpha step (KLA TENCOR).

### (2) T_{off} (%), Haze_{off} (%)

After laminating the ITO surface of the PET-ITO film (GMP EXCELAM-SMART 655) on the top of the liquid crystal capsule film, electrode tape was attached to the ITO surface. T_{off}, which is the transmittance of the liquid crystal capsule film to which no voltage is applied (transmittance at an applied voltage of 0 V), and Haze_{off}, which is the haze of the liquid crystal capsule film to which no voltage is applied (haze at an applied voltage of 0 V), were measured through a haze meter (Nippon Denshoku, NDH7000).

### (3) Threshold Voltage (V), Saturation Voltage(V)

A voltage was applied to the liquid crystal capsule film through a function generator under the same conditions as the measurement conditions of T_{off} (%) and Haze_{off} (%) in the (2). Then, a threshold voltage, which is a voltage at a transmittance of 10% of a maximum transmittance, and a saturation voltage, which is a minimum voltage at which a haze value variation according to the voltage becomes 1%, were measured through a haze meter (Nippon Denshoku Co., Ltd., NDH7000).

### (4) CR, ΔHaze

A voltage was applied to the liquid crystal capsule film through a function generator under the same conditions as the measurement conditions of T_{off} (%) and Haze_{off} (%) in the (2). Then, a contrast(CR), which is a ratio between a transmittance at a voltage of 100 V and a transmittance at a voltage of 0 V, was measured through a haze meter (Nippon Denshoku Co., Ltd., NDH7000). In addition, a haze at an applied voltage of 0 V and a haze at an applied voltage of 100 V were measured through the haze meter (Nippon Denshoku Co., Ltd., NDH7000), and ΔHaze = haze (%) at the applied voltage of 100 V - haze (%) at the applied voltage of 0 V was calculated.

**[Table 1]**

| Experimental Example Measurement Results | | | | | | | | | |
|---|---|---|---|---|---|---|---|---|---|
| Category | | Exam ple 1 | Exam ple 2 | Exam ple 3 | Compar ative Example 1 | Compar ative Example 2 | Compar ative Example 3 | Compar ative Example 4 | Compar ative Example 5 |
| Liqu id cryst al caps ule | Size (µm) | 0.762 ± 0.270 | 0.756 ± 0.383 | 0.756 ± 0.383 | 0.767 ± 0.227 | 0.728 ± 0.203 | 0.838 ± 0.676 | 0.937 ± 0.345 | 1.208 ±0.383 |
| | Ratio of liquid crystal (mass %) | 69.3 | 72.0 | 72.0 | 72.8 | 76.5 | 75.0 | 73.4 | 72 |
| | TGA final decompos ition temperatu re (°C) | 500 | 500 | 500 | 500 | 500 | 400 | 500 | 520 |
| | Whether or not liquid crystal is lost | Good | Good | Good | Good | Good | Poor | Poor | Poor |
| Liqu id cryst al caps ule film | Thickness (µm) | 29.3 | 18.5 | 15.8 | 29.9 | 29.7 | - | - | - |
| | T_{off}(%) | 5.6 | 10.8 | 15.2 | 5.4 | 5.6 | - | - | - |
| | Haze_{off}(% ) | 89.1 | 93.2 | 91.6 | 94.8 | 95.0 | - | - | - |
| | Threshold Voltage (V) | 20 | 20 | 20 | 30 | 30 | - | - | - |
| | Saturation Voltage( V) | 100 | 170 | 150 | 170 | 150 | - | - | - |
| | CR @100V | 7.1 | 3.9 | 3.2 | 5.0 | 6.1 | - | - | - |
| | ΔHaze (%) | -84 | -66 | -68 | -52 | -73 | - | - | - |

As shown in the Table 1, the liquid crystal capsules of the Examples had high durability and good characteristics without loss of liquid crystal. On the other hand, it was confirmed that the liquid crystal capsules of the Comparative Examples 3 to 5 had poor durability due to the loss of liquid crystal. Meanwhile, the liquid crystal capsule film of the Example 1 had a threshold voltage of 20 V and a saturation voltage of 100 V, which were measured to be lower than those of the Comparative Examples. Thus, it was confirmed that the transmittance/haze variable characteristics may be realized at a lower voltage, and since variations in contrast and haze according to voltage application were larger than those of the Comparative Examples, a more excellent transmittance variation rate may be realized at a lower voltage.

In addition, through the liquid crystal capsule films of the Examples 2 and 3, even if a thickness of the film was lowered to a level in a range of 15.8 µm to 18.5 µm, a lower threshold voltage was exhibited compared to the Comparative Examples, and it was confirmed that variations in contrast and haze according to the saturation voltage or the voltage application were maintained at an equivalent level compared to the Comparative Examples.

## Claims

1. A liquid crystal capsule, comprising:
a core containing liquid crystal and an emulsifier; and
a polymer shell formed on a surface of the core;
wherein the emulsifier is a mixture of an acetylenic diol-based compound and an alkylene glycol, and
wherein a content of the alkylene glycol is 4 wt% or more based on the liquid crystal.

2. The liquid crystal capsule according to claim 1,
wherein a content of the alkylene glycol is in a range of 4 wt% to 6 wt% based on the liquid crystal.

3. The liquid crystal capsule according to claim 1,
wherein a content of the alkylene glycol is in a range of 40 wt% to 60 wt% based on the emulsifier.

4. The liquid crystal capsule according to claim 1,
wherein the emulsifier is a mixed solution in which the acetylenic diol-based compound is dissolved in the alkylene glycol.

5. The liquid crystal capsule according to claim 1,
wherein the acetylenic diol-based compound has a content of an ethylene oxide repeating unit of less than 0.001 mol% based on 100 mol% of the acetylenic diol-based compound.

6. The liquid crystal capsule according to claim 1,
wherein the acetylenic diol-based compound has an Hydrophile Lipophile Balance value in a range of 2 to 3.5.

7. The liquid crystal capsule according to claim 1,
wherein the liquid crystal has a cyano group.

8. The liquid crystal capsule according to claim 1,
wherein an average diameter of the liquid crystal capsule is in a range of 400 nm to 5 µm.

9. The liquid crystal capsule according to claim 1,
wherein a final decomposition temperature measured by TGA is in a range of 450 °C to 550 °C when a temperature of the liquid crystal capsule is raised from 50 °C to 700 °C at a heating rate of 10 °C/min.

10. The liquid crystal capsule according to claim 1,
wherein the core further includes an anisotropic dye.

11. The liquid crystal capsule according to claim 1,
wherein the polymer shell comprises a polymer cross-linked with a cross-linking agent.

12. A capsule solution, comprising the liquid crystal capsule of claim 1 and a solvent.

13. The capsule solution according to claim 12,
wherein a mass ratio of liquid crystal is in a range of 60 mass% to 80 mass% based on the capsule solution.

14. An optical film, comprising the liquid crystal capsule of claim 1.

15. The optical film according to claim 14,
wherein a thickness of the optical film is in a range of 10 µm to 30 µm.

16. An optical device, comprising the optical film of claim 14.

17. A transmittance variable device, comprising the optical film of claim 14.
